# EUROPÄISCHE PATENTSCHRIFT

(11) **EP 2 820 700 B1**
(45) Veröffentlichungstag und Bekanntmachung des Hinweises auf die Patenterteilung: **03.07.2024**
(21) Anmeldenummer: 13709339.9
(22) Anmeldetag: 27.02.2013
(51) Int. Cl.: H01M 4/04, H01M 4/36, H01M 4/62, H01M 4/587

(54) **VERFAHREN ZUR HERSTELLUNG VON BESCHICHTETEN AKTIVMATERIALIEN UND DEREN VERWENDUNG FÜR BATTERIEN**
METHOD FOR PRODUCING COATED ACTIVE MATERIALS AND THE USE THEREOF FOR BATTERIES
PROCÉDÉ DE FABRICATION DE MATÉRIAUX ACTIFS REVÊTUS ET LEUR UTILISATION POUR DES BATTERIES

(30) Priorität: 28.02.2012 DE 102012202968
(43) Veröffentlichungstag der Anmeldung: 07.01.2015
(73) Patentinhaber: SGL Carbon SE, 65201 Wiesbaden (DE)
(72) Erfinder: SCHWEISS, Rüdiger-Bernd, 86405 Meitingen (DE); SCHUMANN, Lea, 86405 Meitingen (DE); HAMMER, Christian, 86405 Meitingen (DE)
(86) Internationale Anmeldenummer: PCT/EP2013/053906
(87) Internationale Veröffentlichungsnummer: WO 2013/127836

(56) Entgegenhaltungen:
- EP-A1- 2 065 340
- EP-A1- 2 309 573
- EP-A1- 2 343 760
- MIJUNG NOH ET AL: "Amorphous Carbon-Coated Tin Anode Material for Lithium Secondary Battery", CHEMISTRY OF MATERIALS, Bd. 17, Nr. 8, 1. April 2005 (2005-04-01), Seiten 1926-1929, XP055012113, ISSN: 0897-4756, DOI: 10.1021/cm0481372

## Beschreibung

Die Erfindung betrifft ein Verfahren zur Herstellung von beschichteten Aktivmaterialien, sowie deren Verwendung für Lithium-Ionenbatterien, Lithium-Schwefel-Batterien oder Lithium-Polymerbatterien.

Lithium-Ionenbatterien sind Energiespeichersysteme, die unter den chemischen und elektrochemischen Energiespeichern die höchste Energiedichte aufweisen. Ihre Anwendung finden die Lithium-Ionenbatterien vor allem im Bereich der tragbaren Elektronik, wie beispielsweise Laptops oder Mobiltelefonen, und im Bereich der Fortbewegungsmittel, wie beispielsweise Fahrräder oder Automobile.

Als negatives Elektrodenmaterial ("Anode") finden vor allem graphitischer bzw. amorpher Kohlenstoff, Lithiumtitanat, Silizium-, Titan- oder Zinnverbindungen, sowie Kohlenstoff-Metall-Komposite (C/Si, C/Cu, C/Sn, C/SnO₂) Anwendung. Graphitischer Kohlenstoff zeichnet sich durch geringe Volumenänderungen des Wirtsmaterials aus, die mit der Ein- und Auslagerung von Lithium verbunden sind. So lässt sich für die Lithiumeinlagerung in graphitischem Kohlenstoff nur eine Volumenzunahme von ca. 10% für die Grenzstöchiometrie von LiC₆ messen. Ein Nachteil des graphitischen Kohlenstoffs ist hingegen seine relativ niedrige elektrochemische Kapazität von theoretisch 372 mAh/g Graphit, die etwa nur ein Zehntel der mit Lithiummetall theoretisch erreichbaren elektrochemischen Kapazität von 3862 mAh/g Lithium entspricht.

Beim ersten Ladezyklus beobachtet man eine irreversible Kapazität, welche auf die Bildung des sog. SEI (Solid Electrolyte Interface) zurückzuführen ist. Das SEI ist auf Reaktionen zwischen Elektrolytbestandteilen (Lithiumsalze, Lösungsmittel) an der Oberfläche der Aktivmaterialien zurückzuführen. Gerade bei graphitischen Anodenmaterialien kann eine schnelle Zyklisierung (hohe C-Rate) zu einer Ausweitung des SEIs in das Volumen hinein bzw. zur Exfoliation der graphitischen Struktur und damit letztendlich zu einem weiteren Kapazitätsabfall führen.

Seit langem wird deshalb nach alternativen oder verbesserten Materialien geforscht. Ein Ansatz ist die Beschichtung der Aktivmaterialien mit amorphem Kohlenstoff, wodurch die reversible Kapazität erhöht wird und auch eine Verbesserung der Schnellladefähigkeit erzielt werden kann.

Das beschichtete Aktivmaterial zeigt eine bessere Zyklenstabilität, weil keine rapiden Kapazitätsverluste durch etwaige Schädigungen an der Gitterstruktur des Graphits auftreten.

Als positives Elektrodenmaterial ("Kathode") werden Lithiumverbindungen wie Lithium-Cobaltoxide, Lithium-Nickeloxide, Lithium-Manganoxide, Lithium-Mangan-Spinelle, Lithium-Vanadiumoxide oder Lithiumeisenphosphate eingesetzt. Diese Materialien dienen als Wirtsgitter für Lithiumionen, verfügen aber über nur sehr geringe Leitfähigkeit. Daher wird bei der Fertigung der Kathode Leitruß als Additiv zugesetzt.

Bisher beschriebene Beschichtungstechnologien verwenden aufwändige Verfahren wie Gasphasenabscheidung (Wang et al., Journal of Power Sources 93, 2001, 123f; Zhang et al. Carbon 44, 2006, 2212f) oder Beschichtungsverfahren mit organischen Lösungsmitteln bzw. toxischen Kohlenstoffprecursoren wie beispielsweise Pech (Yoon et al, Journal of Power Sources 94, 2001, 68) und haben zudem den erheblichen Nachteil, dass die Dicke von Beschichtungen schwer zu kontrollieren ist.

Aufgabe der Erfindung ist es, ein Verfahren zur Herstellung von beschichteten Aktivmaterialien zu entwickeln, das es ermöglicht, die Dicke von Beschichtungen gezielt zu steuern und das zudem einfach durchführbar ist.

Gelöst wird diese Aufgabe durch ein Verfahren zur Herstellung von beschichteten Aktivmaterialien gemäß Anspruch 1.

Bei den beschichteten Aktivmaterialien (beispielsweise für Anoden) handelt es sich um Kohlenstoffpartikel, Kohlenstoff-Silizium-Mehrschichtpartikel, Kohlenstoff-Zinn-Mehrschichtpartikel, Kohlenstoff-Zinndioxid-Mehrschichtpartikel, Kohlenstoff-Kupfer-Mehrschichtpartikel, Mehrschichtpartikel aus Kohlenstoff und Metalllegierungen (beispielsweise Metalle wie Silizium, Zinn, Titan und Kobalt, beziehungsweise deren Metalloxide), nanoskalige Partikel von Silizium, Zinn, Zinnoxid, Titandioxid oder Lithiumtitanaten.

Bei den Aktivmaterialien, die nicht Teil der Erfindung sind, (beispielsweise für Kathoden) handelt es sich vorzugsweise um Lithiumsalze wie Lithiumeisenphosphat oder Lithiumoxide wie Lithium-Mangan-Spinelle oder Mischoxide aus Lithium mit Nickel, Cobalt oder Mangan. Die Partikel bestehen vorzugsweise aus amorphem Kohlenstoff und/oder Graphit und/oder es handelt sich bei dem Silizium der Kohlenstoff-Silizium-Mehrschichtpartikel um amorphes, nanoskaliges Silizium und/oder es handelt sich bei dem Metall der Kohlenstoff-Metall-Mehrschichtpartikel und/oder Kohlenstoff-Metalloxid-Mehrschichtpartikel um amorphe, nanoskalige Metalle wie Zinn, Kupfer, Titan oder Kobalt und/oder es handelt sich bei dem Metalloxid der Kohlenstoff-Metalloxid-Mehrschichtpartikel um Oxide von Zinn, Eisen, Titan, Mangan, Nickel oder Kupfer.

Diese elektrisch leitfähigen Partikel weisen bevorzugt einen spezifischen Widerstand von maximal 10⁻² Ω cm auf.

Bei der wässrigen Beschichtung handelt es sich um Substratbeschichtung. Darunter versteht man das Layer-by-Layer Verfahren, bei dem Polyeelektrolytmultischichten erzeugt werden.

Bei dem Layer-by-Layer-Verfahren werden monomolekulare Schichten aus Polyelektrolyten auf ein Substrat aufgebracht. Das Substrat muss eine Oberflächenladung tragen, damit sich ein entgegengesetzt geladener Polyelektrolyt anlagern kann. Durch abwechselndes Aufbringen von kationischen bzw. anionischen Polyelektrolytlagen entsteht ein Schichtsystem, das auf Grund starker Coulomb-Wechselwirkungen sehr stabil ist. Nach jeder Schicht ist ein Waschvorgang nötig. Hierbei werden nicht an der Oberfläche haftende Polyelektrolyte entfernt. Die Lösungen können durch Aufsprühen oder Rotationsbeschichtung auf das Substrat gebracht werden oder das Substrat wird direkt in die Polyelektrolyt-Lösung getaucht.

Die Oberflächen der erfindungsgemäßen Aktivmaterialien werden mit Polyelektrolyten beschichtet. Besonders bevorzugt enthalten die Polyelektrolyte aliphatische und/oder aromatische Ringe und/oder Heterocyclen und/oder Kohlenstoffnanoteilchen. Eine bevorzugte Schichtfolge ist beispielsweise Graphit/b-PEI/AP/CP/AP/CP/AP ..... wobei b-PEI als verzweigtes Polyethylenimin ein kationischer Polyelektrolyt ist, der als Ankerschicht dient.

AP ist bevorzugt ein anionischer Polyelektrolyt wie beispielsweise Polystyren-sulfonat, Polyaminobenzolsulfonsäure, Carboxymethylcellulose, Ligninsulfonat oder sulfonierte Kohlenstoffnanomaterialien (Kohlenstoffnanoröhren, Graphen, Kohlenstoffnanofasern).

CP ist bevorzugt ein kationischer Polyelektrolyt wie beispielsweise Polydiallyl-dimethylammoniumchlorid, Polyvinylpyridin, Chitosan, kationische Stärke, Poly-benzylviologen, bzw. kationische Formen von Polyanilin, Poly(alkyl)pyrrolen oder Poly(alkyl)thiophenen.

Erfindungsgemäß werden Partikel mit einem mittleren Partikeldurchmesser von 200nm bis 150µm eingesetzt, bevorzugt von 100nm bis 80µm und besonders bevorzugt von 0,5µm bis 50µm.

Im Sinne dieser Erfindung wird unter einem mittleren Partikeldurchmesser der d₅₀-Wert verstanden, d.h. ein mittlerer Partikeldurchmesser von 17µm bedeutet, dass 50% aller Partikel einen Partikeldurchmesser von kleiner oder gleich 17µm haben. Gemäß dieser Erfindung werden Partikel mit einer BET-Oberfläche von 0,5 bis 1000 m²/g eingesetzt, bevorzugt von 1 bis 300 m²/g und besonders bevorzugt von 2 bis 100 m²/g.

Vorzugsweise werden die beschichteten Partikel dem Graphittiegel zur Carbonisierung entweder batchweise oder kontinuierlich zugeführt.

Die Carbonisierung erfolgt vorzugsweise bei 400°C bis 3000°C, besonders bevorzugt bei 900°C. Dabei wird in dem erfindungsgemäßen Verfahren als Schutzgase bevorzugt Helium, Neon, Wasserstoff, Stickstoff oder Argon und besonders bevorzugt Argon eingesetzt.

Bei der Carbonisierung werden die Polyelektrolytmultischichten in amorphen Kohlenstoff umgewandelt. Die bevorzugte Dicke der amorphen Kohlenstoffschicht beträgt 1 nm bis 1 µm, besonders bevorzugt 2 bis 500 nm.

Gegenstand der Erfindung ist ferner ein Kern aus Kohlenstoff, Verbindungen oder Mischungen aus Kohlenstoff und Metallen, Verbindungen oder Mischungen aus Kohlenstoff und Metalloxiden, Partikeln von Lithiumsalzen oder Lithiumoxiden, wobei dieser mit Polyelektrolyten mehrlagig beschichtet und anschließend carbonisiert wird.

Vorzugsweise wird der erfindungsgemäße Kern zur Herstellung von Aktivmaterialien für Lithium-Ionenbatterien verwendet.

Weiterer Gegenstand der Erfindung ist eine Lithium-Ionenbatterie, die eine Anode und/oder eine Kathode aus dem erfindungsgemäßen beschichteten Aktivmaterial aufweist. Die Lithium-Ionenbatterie weist als Elektrolyt vorzugsweise eine Elektrolytzusammensetzung aus mindestens einem aprotischen organischen Lösungsmittel (Dimethylcarbonat, Ethylencarbonat, Diethylcarbonat) und als Leitsalze Lithiumhexafluorophosphat, Lithiumtetrafluoroborat oder Lithiumchlorat auf.

Die nach dem erfindungsgemäßen Verfahren hergestellten beschichteten Aktivmaterialien werden für Lithium-Ionenbatterien, Lithium-Polymer-Batterien und Lithium-Schwefelbatterien verwendet.

Die nachfolgenden Ausführungsbeispiele dienen zur Erläuterung der Erfindung. Alle Polyelektrolyte wurden in einer Konzentration von 5 g/L und mit Zusatz von 5 g/L NaCl angesetzt.

### Beispiel 1

10 g Graphit (d₅₀ = 17 µm, BET = 2 m²/g) wurden
a) mit einer Polyethyleniminlösung überschichtet und 2 Minuten geschüttelt, anschließend mit einem Schwarzbandfilter und viel deionisiertem Wasser abgesaugt;
b) dann in 100 ml 5g/L Ligninsulfonatlösung (LS) überführt und wiederum für 2 Minuten geschüttelt. Nach einem weiteren Waschschritt wird der Graphit
c) in Polydiallyldimethylammoniumchloridlösung (PDADMAC) überführt, wiederum für 2 Minuten geschüttelt und anschließend erneut gewaschen.

Die Schritte b und c wurden 6x wiederholt, so dass die folgende Sequenz gebildet wurde:
Graphit / b-PEI / (LS/PDADMAC)₆

### Beispiel 2

50 g Graphit (d₅₀ = 17 µm, BET = 2 m²/g) wurden
a) mit einer Polyethyleniminlösung überschichtet und 2 Minuten geschüttelt, anschließend mit einem Schwarzbandfilter und viel deionisiertem Wasser abgesaugt;
b) dann in 100 ml 5g/L Polystyrensulfonatlösung (PSS) überführt und wiederum für 2 Minuten geschüttelt. Nach einem weiteren Waschschritt wird der Graphit
c) in Polydiallyldimethylammoniumchloridlösung (PDADMAC) überführt, wiederum für 2 Minuten geschüttelt und anschließend erneut gewaschen.

Die Schritte b und c wurden 6x wiederholt, so dass die folgende Sequenz gebildet wurde: Graphit / b-PEI / (PSS/PDADMAC)₆

Die Carbonsierung der beiden Beschichtungen erfolgte bei 900°C in einem Graphittiegel über 3 Tage. Die Partikel wurden mit Polyvinylidendifluorid als Bindersubstanz in N-Methylpyrrolidon (NMP) dispergiert und als Elektrodenfilm auf eine Kupferfolie beschichtet und daraus T-Zellen gefertigt. Die elektrochemische Analyse (T-Zelle) zeigt für die beiden Kennwerte Effizienz und Kapazität überraschend bessere Werte im Vergleich zu dem unbeschichteten Referenzsubstrat.

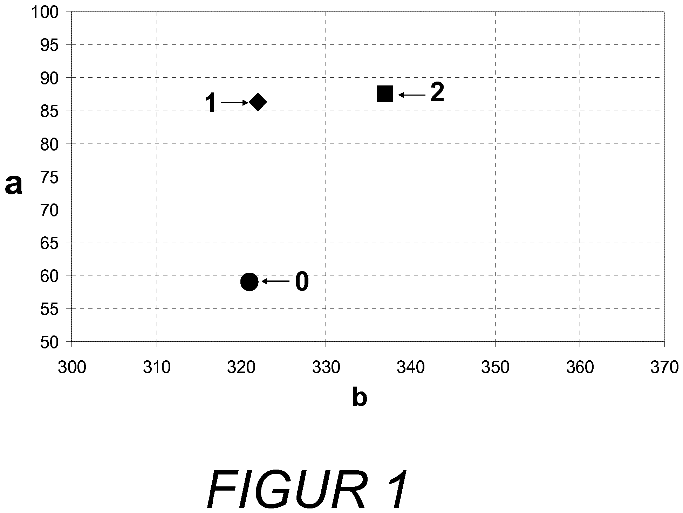

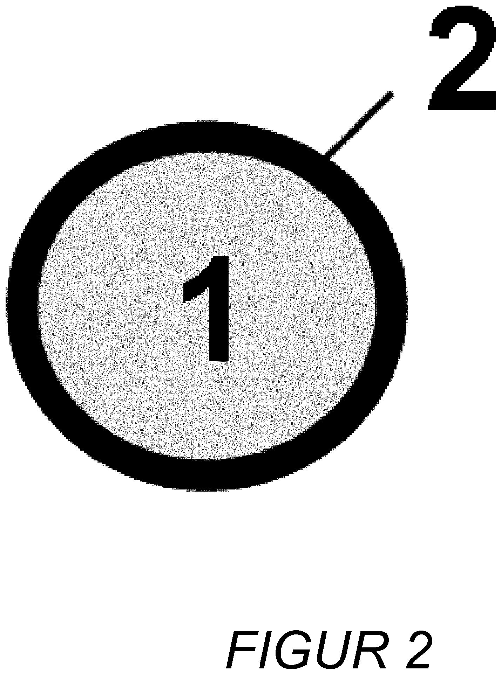

Die Figuren 1 und 2 beschreiben die Erfindung beispielhaft.

In der Figur 1 erkennt man, dass bei einer Kapazität von 320 mAh/g die Effizienz für das unbeschichtete Referenzsubstrat unter 60% beträgt (Bezugszeichen 0), wohingegen das beschichtete Substrat aus Beispiel 1 eine Effizienz von über 85% erreicht (Bezugszeichen 1). Das beschichtete Substrat aus Beispiel 2 erreicht bei einer Kapazität von 340 mAh/g sogar eine Effizienz von fast 90% (Bezugszeichen 2). Somit konnte gezeigt werden, dass die erfindungsgemäßen beschichteten Substrate die reversible Kapazität deutlich erhöhen und damit auch die Schnellladefähigkeit verbessert wird.

In der Figur 2 ist ein erfindungsgemäßes Partikel beispielhaft abgebildet, wobei Bezugszeichen 1 den Kern und Bezugszeichen 2 die Beschichtung darstellt.

### Legende zu den Figuren:

### Figur 1

a) Effizienz (%)
b) Kapazität (mAh/g)
   0) Referenz (unbeschichteter Graphit)
   1) beschichteter Graphit (Ausführungsbeispiel 1)
   2) beschichteter Graphit (Ausführungsbeispiel 2)

### Figur 2

1) Kern
**2)** Beschichtung

## Patentansprüche

1. Verfahren zur Herstellung von beschichteten Aktivmaterialien, bei welchen es sich um negative Elektrodenmaterialien handelt, **dadurch gekennzeichnet, dass** die Oberflächen der Aktivmaterialien wässrig nach dem Layer-by-Layer Verfahren beschichtet werden, wobei das Layer-by-Layer Verfahren das abwechselnde Aufbringen von kationischen und anionischen Polyelektrolytlagen und mindestens einen Waschvorgang zwischen den abwechselnden Aufbringungen umfasst, wobei Polyelektrolytmultischichten erzeugt werden und die mit den Polyelektrolytmultischicht beschichteten Aktivmaterialien anschließend carbonisiert werden; und
wobei es sich bei den beschichteten Aktivmaterialien um Kohlenstoffpartikel, Kohlenstoff-Silizium-Mehrschichtpartikel, Kohlenstoff-Zinn-Mehrschichtpartikel, Kohlenstoff-Zinndioxid-Mehrschichtpartikel, Kohlenstoff-Kupfer-Mehrschichtpartikel, Mehrschichtpartikel aus Kohlenstoff und Metalllegierungen, nanoskalige Partikel von Silizium, Zinn, Zinndioxid, Titandioxid oder Lithiumtitanaten handelt.

2. Verfahren zur Herstellung von beschichteten Aktivmaterialien nach Anspruch 1, **dadurch gekennzeichnet, dass** die Kohlenstoffpartikel aus amorphem Kohlenstoff und/oder Graphit bestehen und/oder es sich bei dem Silizium der Kohlenstoff-Silizium-Mehrschichtpartikel um amorphes, nanoskaliges Silizium handelt und/oder es sich bei dem Metall der Kohlenstoff-Metall-Mehrschichtpartikel und/oder Kohlenstoff-Metalloxid-Mehrschichtpartikel um amorphe, nanoskalige Metalle wie Zinn, Kupfer, Titan oder Cobalt handelt und/oder es sich bei dem Metalloxid der Kohlenstoff-Metalloxid-Mehrschichtpartikel um Oxide von Zinn, Eisen, Titan, Mangan, Nickel oder Kupfer handelt.

3. Verfahren zur Herstellung von beschichteten Aktivmaterialien nach einem oder mehrerer der vorangehenden Ansprüche, **dadurch gekennzeichnet, dass** die Polyelektrolyte aliphatische und/oder aromatische Ringe und/oder Heterocyclen und/oder Kohlenstoffnanomaterialien enthalten.

4. Verfahren zur Herstellung von beschichteten Aktivmaterialien nach einem oder mehrerer der vorangehenden Ansprüche, **dadurch gekennzeichnet, dass** Partikel mit einem mittleren Partikeldurchmesser von 200nm bis 150µm, bevorzugt von 100nm bis 80µm und besonders bevorzugt von 0,5µm bis 50µm eingesetzt werden.

5. Verfahren zur Herstellung von beschichteten Aktivmaterialien nach einem oder mehrerer der vorangehenden Ansprüche, **dadurch gekennzeichnet, dass** Partikel mit einer BET-Oberfläche von 0,5 bis 1000 m²/g, bevorzugt von 1 bis 300 m²/g und besonders bevorzugt von 2 bis 100 m²/g eingesetzt werden.

6. Verfahren zur Herstellung von beschichteten Aktivmaterialien nach einem oder mehrerer der vorangehenden Ansprüche, **dadurch gekennzeichnet, dass** die beschichteten Partikel dem Graphittiegel zur Carbonisierung entweder batchweise oder kontinuierlich zugeführt werden.

7. Beschichtetes Aktivmaterial, welches nach einem Verfahren gemäß einem der vorhergehenden Ansprüche erhältlich ist.

8. Lithium-Ionenbatterie, **dadurch gekennzeichnet, dass** diese eine Anode aus dem beschichteten Aktivmaterial nach Anspruch 7 aufweist.

9. Verwendung der nach einem oder mehrerer der Ansprüche 1 bis 6 hergestellten beschichteten Aktivmaterialien für Lithium-Ionenbatterien, Lithium-Polymer-Batterien und Lithium-Schwefelbatterien.

## Claims

1. Method for producing coated active materials, which are negative electrode materials, **characterized in that** the surfaces of the active materials are aqueously coated according to the layer-by-layer method, the layer-by-layer method comprising the alternating application of cationic and anionic polyelectrolyte layers and at least one washing step between the alternating application, with polyelectrolyte multilayers being produced and the active materials coated with the polyelectrolyte multilayers subsequently being carbonized; and
the coated active materials being carbon particles, carbon-silicon multilayer particles, carbon-tin multilayer particles, carbon-tin dioxide multilayer particles, carbon-copper multilayer particles, multilayer particles made of carbon and metal alloys, nanoparticles of silicon, tin, tin dioxide, titanium dioxide, or lithium titanates.

2. Method for producing coated active materials according to claim 1, **characterized in that** the carbon particles consist of amorphous carbon and/or graphite, and/or the silicon of the carbon-silicon multilayer particles is an amorphous nanoscale silicon, and/or the metal of the carbon-metal multilayer particles and/or carbon-metal oxide multilayer particles is amorphous nanoscale metals such as tin, copper, titanium or cobalt, and/or the metal oxide of the carbon-metal oxide multilayer particles is oxides of tin, iron, titanium, manganese, nickel or copper.

3. Method for producing coated active materials according to one or more of the preceding claims, **characterized in that** the polyelectrolytes contain aliphatic and/or aromatic rings and/or heterocycles and/or carbon nanomaterials.

4. Method for producing coated active materials according to one or more of the preceding claims, **characterized in that** particles having an average particle diameter of 200 nm to 150 µm, preferably of 100 nm to 80 µm, and particularly preferably of 0.5 µm to 50 µm, are used.

5. Method for producing coated active materials according to one or more of the preceding claims, **characterized in that** particles with a BET surface area of 0.5 to 1000 m²/g, preferably of 1 to 300 m²/g, and particularly preferably of 2 to 100 m²/g, are used.

6. Method for producing coated active materials according to one or more of the preceding claims, **characterized in that** the coated particles are fed either in batches or continuously to the graphite crucible for carbonization.

7. Coated active material obtainable by a method according to any of the preceding claims.

8. Lithium ion battery, **characterized in that** it has an anode made of the coated active material according to claim 7.

9. Use of the coated active materials produced according to one or more of claims 1 to 6 for lithium-ion batteries, lithium polymer batteries, and lithium sulfur batteries.

## Revendications

1. Procédé pour la fabrication de matériaux actifs revêtus, lesquels matériaux sont des matériaux d'électrode négatifs, **caractérisé en ce que** les surfaces des matériaux actifs sont revêtues par voie aqueuse selon un procédé couche par couche, dans lequel le procédé couche par couche comprend l'application alternée de couches de polyélectrolyte cationiques et anioniques et au moins une étape de lavage entre les applications alternées, dans lequel les multicouches de polyélectrolyte sont créées et les matériaux actifs revêtus avec les multicouches de polyélectrolyte sont ensuite carbonisés ; et
dans lequel les matériaux actifs revêtus sont des particules de carbone, particules multicouches de carbone-silicium, particules multicouches de carbone-étain, particules multicouches de carbone-dioxyde d'étain, particules multicouches de carbone-cuivre, particules multicouches de carbone et d'alliages métalliques, particules nanométriques de silicium, étain, dioxyde d'étain, dioxyde de titane ou titanates de lithium.

2. Procédé pour la fabrication de matériaux actifs revêtus selon la revendication 1, **caractérisé en ce que** les particules de carbone sont constituées de carbone amorphe et/ou de graphite et/ou le silicium des particules multicouches de carbone-silicium est un silicium nanométrique amorphe et/ou le métal des particules multicouches de carbone-métal et/ou les particules multicouches de carbone-oxyde de métal est un métal nanométrique amorphe tel que l'étain, cuivre, titane ou cobalt et/ou l'oxyde de métal des particules multicouches de carbone-oxyde de métal est un oxyde d'étain, fer, titane, manganèse, nickel ou cuivre.

3. Procédé pour la fabrication de matériaux actifs revêtus selon l'une ou plusieurs des revendications précédentes, **caractérisé en ce que** les polyélectrolytes contiennent des cycles aliphatiques et/ou aromatiques et/ou des hétérocycles et/ou des nanomatériaux de carbone.

4. Procédé pour la fabrication de matériaux actifs revêtus selon l'une ou plusieurs des revendications précédentes, **caractérisé en ce que** des particules comportant un diamètre particulaire moyen de 200 nm à 150 µm, de préférence de 100 nm à 80 µm et de manière particulièrement préférée de 0,5 µm à 50 µm sont utilisées.

5. Procédé pour la fabrication de matériaux actifs revêtus selon l'une ou plusieurs des revendications précédentes, **caractérisé en ce que** des particules comportant une surface BET de 0,5 à 1000 m²/g, de préférence de 1 nm à 300 m²/g et de manière particulièrement préférée de 2 µm à 100 m²/g sont utilisées.

6. Procédé pour la fabrication de matériaux actifs revêtus selon l'une ou plusieurs des revendications précédentes, **caractérisé en ce que** les particules revêtues sont acheminées soit en discontinu soit en continu au creuset en graphite pour la carbonisation.

7. Matériau actif revêtu, lequel peut être obtenu selon un procédé conformément à l'une des revendications précédentes.

8. Batterie lithium-ion, **caractérisée en ce qu'**elle présente une anode constituée du matériau actif revêtu selon la revendication 7.

9. Utilisation des matériaux actifs revêtus produits selon l'une ou plusieurs des revendications 1 à 6 pour des batteries à ions lithium, batteries lithium-polymère et batteries lithium-soufre.
